# EUROPÄISCHE PATENTSCHRIFT

(11) **EP 0 642 413 B1**
(45) Veröffentlichungstag und Bekanntmachung des Hinweises auf die Patenterteilung: **15.11.1995**
(21) Anmeldenummer: 93909356.3
(22) Anmeldetag: 30.04.1993
(51) Int. Cl.: B32B 15/04, B32B 15/14, E04C 2/26

(54) **PLATTENARTIGES BAUELEMENT UND VERFAHREN ZU DESSEN HERSTELLUNG**
PLATE-LIKE CONSTRUCTION ELEMENT AND METHOD OF MANUFACTURING IT
ELEMENT DE CONSTRUCTION SE PRESENTANT SOUS FORME DE PLAQUE ET SON PROCEDE DE FABRICATION

(30) Priorität: 04.06.1992 DE 4218464
(43) Veröffentlichungstag der Anmeldung: 15.03.1995
(73) Patentinhaber: May, Hans Josef, D-58638 Iserlohn (DE); Schnettler, Roland, D-58099 Hagen (DE)
(72) Erfinder: May, Hans Josef, D-58638 Iserlohn (DE); Schnettler, Roland, D-58099 Hagen (DE)
(74) Vertreter: Schröter, Martin, Dipl.-Ing.
(86) Internationale Anmeldenummer: DE9300394
(87) Internationale Veröffentlichungsnummer: WO9324317

(56) Entgegenhaltungen:
- EP-A- 0 123 186
- EP-A- 0 220 651
- DE-A- 2 438 637
- DE-A- 2 903 746
- GB-A- 2 151 983

## Beschreibung

Die Erfindung betrifft ein plattenartiges Bauelement in der Art einer selbsttragenden Sandwichkonstuktion, bestehend aus einer zwischen zwei Metallplatten eingebundenen Wärmedämmschicht, sowie Verfahren zur Herstellung solcher Bauelemente.

Aus der internationalen Offenlegungsschrift Wo 88/06259 ist bereits ein Flächenheizungs- oder -kühlsystem bekannt, bei dem eine mit inneren Kanälen verbundene Wärmeleitplatte den Obergut bildet, wobei mit dieser Wärmeleitplatte über eine Wärmedämmschicht aus Kunststoff, vorzugsweise einem geschäumten Polyurethan, eine Unterplatte aus Metall schubfest verbunden ist.

Bekannt sind auch plattenartige Bauelemente für Dach-, Wand- oder Deckensysteme, bei denen zwischen zwei in der Regel profilierten Metallplatten, vorzugsweise aus Stahl, Wärmedämmschichten eingeklebt sind. Die Oberflächen dieser Metallplatten sind dabei mit Kunststoff beschichtet. Die Wärmedämmschicht bildet dabei häufig ein Mineralfaser-Dämmkern. Solche Bauelemente können jedoch nicht als selbsttragend angesehen werden, da sie in der Regel keine ausreichende Schubfestigkeit besitzen. Als nachteilig erweist sich die Kunststoffbeschichtung im Brandfalle. Es werden unter anderem Dioxine frei. Eine Freisetzung von gefährlichen Gasen erfolgt im Brandfalle auch häufig dann, wenn entsprechende Kunststoffkleber zur Verbindung der Metallplatten mit der Wärmedämmschicht verwendet werden.

Die Aufgabe der Erfindung besteht darin, ein beschichtetes plattenartiges Bauelement in der Art einer selbsttragenden Sandwichkonstruktion vorzuschlagen, bei dem auf den Einsatz von Kunststoffen verzichtet wird und eine schubfeste Verbindung zwischen der Wärmedämmschicht und den beschichteten Metallplatten erreicht wird. Gleichzeitig ist Aufgabe der Erfindung ein Verfahren zur Herstellung solcher Bauelemente vozuschlagen.

Gelöst wird die Erfindungsaufgabe mit einem plattenartigen Bauelement der eingangs genannten Art, bei dem die Wärmedämmschicht aus einem stark verdichteten hochwarmfesten Faserwerkstoff oder einem geschäumten Glas besteht und die Metallplatten mindestens an der Innenseite emailbeschichtet sind und daß der Faserwerkstoff oder das geschäumte Glas durch Einschmelzung in die Emailschicht mit den Metallplatten verbunden ist. Bevorzugt werden dabei Wärmedämmschichten aus Glas- oder Steinwolle verwendet.

Nach einem weiteren Vorschlag der Erfindung wird eine niedrigschmelzende Emailschicht auf den Innenseiten der Metallplatten, vorzugsweise Stahlplatten, vorgesehen.

Ebenso kann es von Vorteil sein, zwischen den Metallplatten und der Emailschicht eine Zwischenschicht aus NE-Metallen oder NE-Legierungen vorzusehen, wodurch die Korrosionsfestigkeit verbessert wird.

Erfindungsgemäß werden plattenartige Bauelemente so hergestellt, daß eine plattenartige Wärmedämmschicht aus Faserwerkstoffen zwischen den Metallplatten mit einem schmelzflüssigen Emailüberzug an ihren Innenseiten eingepreßt wird. Dabei kann die Wärmedämmschicht aus Fasern unterschiedlicher Plastifizierungstemperatur bestehen, wobei die niedrigschmelzenden Fasern über ihre Plastifizierungstemperatur erhitzt und dadurch das Fasergewebe sowohl untereinander vernetzen als auch in die Emailschichten der Metallplatten unter Pressung einschmelzen.

Nach einem weiteren erfindungsgemäßen Vorschlag werden hochschmelzende Glasfaser- oder Steinwollgewebe mit niedrigschmelzendem Glaspulver eingepudert, wobei der niedrigschmelzende Glaspuder über die Plastifizierungstemperatur erhitzt wird und dadurch sowohl in der Steinwolle vernetzt als auch in die Emailschichten der Metallplatten unter Pressung einschmilzt.

Aus der DE-OS 32 00 487 ist ein Verfahren zur Herstellung von Verbundkörpern aus silikatischen und metallischen Werkstoffen bekannt, dabei werden die Metallteile in eine silikatische Schmelze eingebracht und gegebenenfalls zur Verbesserung des Verbundes noch mit einem als Schlicker aufgebrachten Glaspulver vorher überzogen.

Als schematisches Ausführungsbeispiel ist ein Längsschnitt durch ein erfindungsgemäßes Bauelement beigefügt. Zwischen zwei Stahlplatten 1, die an ihren Innenseiten mit einer beispielsweise niedrigschmelzenden Emailschicht beschichtet sind, ist eine Wärmedämmschicht aus Glas- oder/und Steinwolle 2 in stark verdichtetem Zustand eingepreßt. Die Randfasern dieser Wärmedämmschichten 2 sind dabei in die Emailschicht 12 eingeschmolzen, so daß eine schubfeste Verbindung zwischen den Metallplatten 1 und der Wärmedämmschicht 2 entstanden ist. Vorzugsweise sind auch die Außenseiten 11 der Metallplatten 1 mit Email beschichtet.

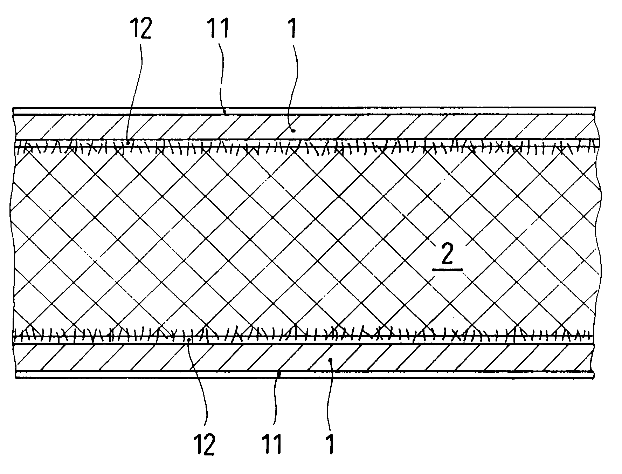

## Patentansprüche

1. Plattenartiges Bauelement in der Art einer selbsttragenden Sandwichkonstruktion, bestehend aus einer zwischen zwei Metallplatten eingebundenen Wärmedämmschicht, **dadurch gekennzeichnet,** daß die Wärmedämmschicht (2) aus einem stark verdichteten hochwarmfesten Faserwerkstoff oder einem geschäumten Glas besteht, daß die Metallplatten (1), vorzugsweise Stahlplatten, mindestens an der Innenseite (12) emailbeschichtet sind und daß der Faserwerkstoff oder das geschäumte Glas durch Einschmelzung in die Emailschicht mit den Metallplatten verbunden ist.

2. Bauelement nach Anspruch 1, **dadurch gekennzeichnet,** daß der Faserwerkstoff Glas- oder Steinwolle ist.

3. Bauelement nach Anspruch 1, **gekennzeichnet durch** eine niedrig schmelzende Emailschicht auf den Innenseiten (12) der Metallplatten (1).

4. Bauelement nach einem oder mehreren der vorangegangenen Ansprüche, **dadurch gekennzeichnet,** daß zwischen den Metallplatten (1) und der Emailschicht eine Zwischenschicht aus NE-Metallen oder NE-Legierungen vorgesehen ist.

5. Verfahren zur Herstellung eines plattenartigen Bauelementes nach einem oder mehreren der vorangegangenen Ansprüche, **dadurch gekennzeichnet,** daß die plattenartige Wärmedämmschicht (2) aus Faserwerkstoffen zwischen den Metallplatten (1) mit schmelzflüssigem Emailüberzug an ihren Innenseiten (12) eingepreßt wird.

6. Verfahren nach Anspruch 5, **dadurch gekennzeichnet,** daß für die Wärmedämmschicht (2) Fasern unterschiedlicher Plastifizierungstemperatur verwendet werden und daß die bei niedrigerer Temperatur schmelzenden Fasern über ihre Plastifizierungstemperatur erhitzt werden, um dadurch das Fasergewebe sowohl untereinander zu vernetzen, als auch in die Emailschichten der Metallplatten (1) unter Pressung einzuschmelzen.

7. Verfahren nach Anspruch 5, **dadurch gekennzeichnet,** daß ein hochschmelzendes Glasfaser- oder Steinwollgewebe mit niedrigschmelzendem Glaspulver eingepudert ist, wobei der niedrigschmelzende Glaspuder über die Plastifizierungstemperatur erhitzt wird und dadurch sich sowohl in der Steinwolle vernetzt als auch in die Emailschicht der Metallplatten (1) unter Pressung einschmilzt.

## Claims

1. Plate-like constructional element in the form of a self-supporting sandwich construction, comprising a heat-insulating layer bonded between two metal plates, characterised in that the heat-insulating layer (2) is formed from a highly compressed, heat-resistant fibrous material or a foamed glass, in that the metal plates (1), preferably steel plates, are coated with enamel at least on the inner side (12), and in that the fibrous material or the foamed glass is connected to the metal plates by being fused into the enamel layer.

2. Constructional element according to claim 1, characterised in that the fibrous material is glass wool or rock wool.

3. Constructional element according to claim 1, characterised by a low melting enamel layer on the inner sides (12) of the metal plates (1).

4. Constructional element according to one or more of the preceding claims, characterised in that an intermediate layer of nonferrous metals or nonferrous alloys is provided between the metal plates (1) and the enamel layer.

5. Method of producing a plate-like constructional element according to one or more of the preceding claims, characterised in that the plate-like heat-insulating layer (2), formed from fibrous materials, is pressed between the metal plates (1) which are provided with a molten enamel coating on their inner sides (12).

6. Method according to claim 5, characterised in that fibres having different plasticising temperatures are used for the heat-insulating layer (2), and in that the fibres, which melt at a lower temperature, are heated above their plasticising temperature in order thereby both to cross-link the fibrous fabric and to fuse it into the enamel layers of the metal plates (1) through pressure.

7. Method according to claim 5, characterised in that a high-melting glass fibre fabric or rock wool fabric is dusted with low-melting glass powder, whereby the low-melting glass powder is heated above the plasticising temperature and is thereby both cross-linked in the rock wool and fused into the enamel layer of the metal plates (1) through pressure.

## Revendications

1. Élément de construction se présentant sous forme de plaque du type d'un panneau sandwich autoporteur, composé d'une couche calorifuge intégrée entre deux plaques métalliques, caractérisé en ce que la couche calorifuge (2) se compose d'un matériau renforcé par des fibres, fortement comprimé et à haute résistance à chaud, ou d'un verre moussé, en ce que les plaques métalliques (1), de préférence des plaques en acier, sont couvertes d'une couche d'émail, au moins sur le côté intérieur (12) et en ce que le matériau renforcé par des fibres ou le verre moussé est assemblé aux plaques métalliques par scellement d'étanchéité dans la couche d'émail.

2. Élément de construction selon la revendication 1, caractérisé en ce que le matériau renforcé par des fibres est de la laine de verre ou de la laine minérale.

3. Élément de construction selon la revendication 1, caractérisé en ce que la couche d'émail présente un bas point de fusion et en ce qu'elle est située sur les côtés intérieurs (12) des plaques métalliques.

4. Élément de construction selon l'une ou plusieurs des revendications précédentes, caractérisé en ce qu'une couche intermédiaire en métaux non-ferreux ou en alliages non-ferreux est prévue entre les plaques métalliques (1) et la couche d'émail.

5. Procédé pour la fabrication d'un élément de construction se présentant sous forme de plaque selon l'une ou plusieurs des revendications précédentes, caractérisé en ce que la couche calorifuge (2) en matériau renforcé par des fibres située entre les plaques métalliques (1) est revêtue d'une pellicule d'émail en fusion sur ses côtés intérieurs (12).

6. Procédé selon la revendication 5, caractérisé en ce que pour la couche calorifuge (2) des fibres ayant une température de ramollissement variable sont utilisées et en ce que les fibres, dont la fusion s'effectue à basse température, sont chauffées au-dessus de leur température de ramollissement afin, par ce moyen, de tout aussi bien réticuler le tissu de fibres que de le fondre par compression dans les couches d'émail des plaques métalliques (1).

7. Procédé selon la revendication 5, caractérisé en ce qu'un tissu de fibres de verre ou de laine minérale à haut point de fusion est saupoudré de calcin à bas point de fusion, étant précisé le calcin à bas point de fusion est chauffé au-dessus de sa température de ramollissement et, de cette façon, il se réticule aussi bien dans la laine minérale qu'il se fond par compression dans la couche d'émail des plaques métalliques (1).
